# EUROPÄISCHE PATENTSCHRIFT

(11) **EP 1 740 426 B1**
(45) Veröffentlichungstag und Bekanntmachung des Hinweises auf die Patenterteilung: **05.11.2008**
(21) Anmeldenummer: 05732209.1
(22) Anmeldetag: 20.04.2005
(51) Int. Cl.: B60T 7/00

(54) **ROLLOSYSTEM FÜR EIN FAHRZEUGDACH**
ROLLER BLIND SYSTEM FOR A VEHICLE ROOF
SYSTEME DE STORE POUR TOIT DE VEHICULE

(30) Priorität: 26.04.2004 DE 102004020335
(43) Veröffentlichungstag der Anmeldung: 10.01.2007
(73) Patentinhaber: Webasto AG, 82131 Stockdorf (DE)
(72) Erfinder: ELBS, Norbert, 80797 München (DE); SCHULZ, Horst-Martin, 86947 Weil (DE); STEMMER, Thomas, 81371 München (DE)
(86) Internationale Anmeldenummer: PCT/EP2005/004207
(87) Internationale Veröffentlichungsnummer: WO 2005/102803

(56) Entgegenhaltungen:
- DE-A1- 10 327 352
- DE-A1- 10 333 474
- DE-C1- 19 750 715
- FR-A- 2 786 809

## Beschreibung

Die vorliegende Erfindung betrifft ein Rollosystem für ein Kraftfahrzeugdachgemäß dem Oberbegriff von Anspruch 1.

Falls ein Rollosystem mit zwei Rolloanordnungen von einem Antriebssystem angetrieben angetrieben werden soll und die beiden Rolloanordnungen unterschiedliche Auszugslängen aufweisen, wird herkömmlicherweise jeder Rolloanordnung ein separater Antrieb, bestehend aus einem von einem Elektromotor angetriebenen Ritzel und zwei von dem Ritzel angetriebenen Antriebskabeln, die jeweils an einem der beiden seitlichen Enden des Zugspriegels fest angreifen, zugeordnet. Eine alternative Möglichkeit wäre, die beiden getrennten, jeweils zwei Antriebskabel umfassenden Antriebskabelsysteme mittels eines gemeinsamen Motors und einem Getriebezwischenrad anzutreiben. In jedem Fall ist ein solches Rollosystem aufgrund der Verwendung von vier Antriebskabeln und zwei Motoren bzw. eines Motors und eines Getriebezwischenrads recht aufwändig.

Ein gattungsgemäßes Rollosystem ist in der DE 197 50 715 C1 beschrieben, wobei zwei Antriebskabel von einem gemeinsamen Ritzel angetrieben werden und wobei an jedem der beiden Enden eines jeden Kabels ein Mitnehmer angeordnet ist. Die beiden Rolloanordnungen weisen eine unterschiedliche Auszugslänge auf, wobei jeweils einer der beiden Mitnehmer fest mit dem Zugspriegel des Rollos mit der größeren Auszugslänge verbunden ist. Die Länge der Antriebskabel ist so bemessen, dass beim Ausziehen der Rollos, die Rücken an Rücken angeordnet sind, zunächst das Rollo mit der längeren Auszugsklänge mittels der fest angebrachten Mitnehmer ein Stück weite ausgezogen wird, ehe sich die beiden freien Mitnehmer an den Zugspriegel des Rollos mit der kürzeren Auszugslänge anlegen, wobei dann beide Rollos gemeinsam bis zur vollen Länge ausgezogen werden.

In der DE 103 27 352 A1 ist ein Antriebssystem für ein Fahrzeugdach beschreiben, wobei ein Motor zwei Ritzel antreibt, die ihrerseits jeweils wieder zwei Antriebskabel antreiben.

In der DE 103 33 474 A1 ist ein Antriebssystem für ein Fahrzeugdach beschrieben, wobei ein Motor zwei Antriebskabel antreibt, die gemeinsam einen Schiebedeckel des Fahrzeugdaches und ein unterhalb der Schiebedeckelöffnung angeordnetes Rollo antreiben.

Es ist Aufgabe der vorliegenden Erfindung, ein angetriebenes Rollosystem für ein Fahrzeugdach mit zwei Rolloanordnungen zu schaffen, welches unterschiedliche Auszugslängen der beiden Rolloanordnungen erlaubt, bei dem die Zugspriegel bei Bewegung immer mit dem Antriebskabel im Eingriff sind, und welches dennoch einfach und kostengünstig aufgebaut ist.

Diese Aufgabe wird erfindungsgemäß gelöst durch ein Rollosystem gemäß Anspruch 1. Dabei ist vorteilhaft, dass durch das Vorsehen eines selbsttätigen Verriegelungsselements für die lösbare Kopplung des fest mit der ersten Rolloanordnung gekoppelten Antriebskabels mit der zweiten Rolloanordnung beide Rolloanordnungen auch bei unterschiedlicher Auszugslänge von dem gleichen Antriebskabel angetrieben werden können. Auf diese Weise ist es möglich, das Rollosystem mit nur einem einzigen Antriebskabel bzw. bei beidseitigem Antrieb mit zwei Antriebskabeln anzutreiben und im Bewegungsfall immer eine feste Verbindung der Zugspriegel zum Antriebskabel zu haben. Dadurch wird eine kostengünstige, kompakte Bauweise mit möglichst wenigen Bauteilen realisiert, die auch für Rollosysteme mit mittengetriebene Zugspriegel geeignet ist.

Bevorzugte Ausgestaltungen der Erfindung ergeben sich aus den Unteransprüchen.

Im folgenden werden Beispiele der Erfindung unter Bezugnahme auf die beigefügten Zeichnungen beispielhaft näher erläutert. Dabei zeigen:
- Fig. 1: eine schematische Ansicht auf eines erfindungsgemäßen Rollosystems von unten;
- Fig. 2: eine schematische perspektivische Ansicht eines der beiden Antriebsstränge, wobei eines der beiden Antriebskabel im entkoppelten Zustand gezeigt ist;
- Fig. 3: eine vergrößerte perspektivische Ansicht des Bereichs III von Fig. 2, wobei jedoch das Antriebskabel im gekoppelten Zustand gezeigt ist;
- Fig. 4: eine entsprechende Seitenansicht zu Fig. 3;
- Fig. 5 und 6: Ansichten wie Fig. 3 bzw. Fig. 4, wobei jedoch der in Fig. 2 gezeigte entkoppelte Zustand des Antriebskabels gezeigt ist; und
- Fig. 7: eine schematische perspektivische Ansicht von schräg unten eines erfindungsgemäßen Rollosystems.

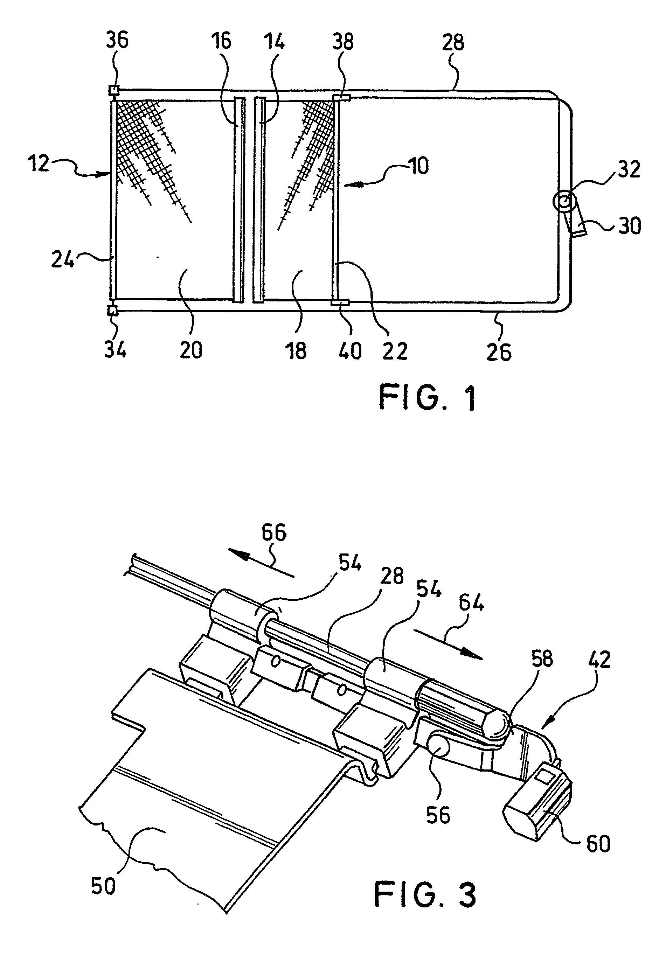

Gemäß Fig. 1 umfasst ein Rollosystem für ein Fahrzeugdach eine vordere Rolloanordnung 10 und eine hintere Rolloanordnung 12, die in Dachlängsrichtung hintereinander angeordnet sind, um einen oder mehrere transparente Dachabschnitte von unten bezüglich des Fahrzeuginnenraums wahlweise zu verdecken oder mindestens teilweise freizugeben, um den Lichteinfall und die Sonneneinstrahlung in en Fahrzeuginnenraum nach den Wünschen der Fahrzeuginsassen veränderlich zu gestalten. Beide Rolloanordnungen 10, 12 bestehen im wesentlichen aus einer Wickelwelle 14 bzw. 16, auf welche jeweils eine Rollobahn 18 bzw. 20, ausgehend von ihrem einen Ende, aufwickelbar bzw. von dieser abwickelbar ist. Das andere, freie Ende der Rollobahn 18, 20 ist mit einem Zugspriegel 22 bzw. 24 versehen, welcher zur Betätigung der Rolloanordnung 10 bzw. 12 dient.

Die beiden Rolloanordnungen 10, 12 sind in entgegengesetzter Richtung betätigbar, d.h. zum Abwickeln bzw. Ausrollen der Rollobahn 18 bzw. 20 müssen die Zugspriegel 22 bzw. 24 in entgegengesetzter Richtung bewegt werden. Bei dem in Fig. 1 gezeigten Beispiel sind die beiden Wickelwellen 14 bzw. 16 benachbart zueinander angeordnet, d.h. die Rolloanordnungen 19, 10 sind "Rücken-an-Rücken" angeordnet.

Die Wickelwellen 14, 16 sind in die Aufwickelrichtung vorgespannt, z.B. mittels einer geeigneten Federanordnung.

Die beiden Zugspriegel 22, 24 sind seitlich jeweils in einer dachfesten Führung (nicht gezeigt) in Dachlängsrichtung verschiebbar geführt.

Zum Betätigen der Rolloanordnungen 10, 12 ist ein gemeinsames Antriebssystem vorgesehen, welches zwei Antriebskabel 26 und 28 sowie einen Elektromotor 30 mit einem von dem Motor 30 angetriebenen Ritzel 32 umfasst, wobei das Ritzel 32 an seinem Außenumfang mit beiden Antriebskabeln 26, 28 in an sich bekannter Weise in Eingriff steht, um diese in entgegengesetzte Richtung anzutreiben.

Die beiden Antriebskabel 26, 28 sind drucksteif ausgebildet und in entsprechenden Kabelführungen (nicht gezeigt) verschiebbar geführt. Jedes der Antriebskabel 26, 28 steht an einer ersten Stelle 34 bzw. 36 in festem Eingriff mit einem der seitlichen Enden des Zugspriegels 24 der hinteren Rolloanordnung 12 sowie an einer zweiten Stelle 38 bzw. 40 in Eingriff mit einem der beiden seitlichen Enden des Zugspriegels 22 der vorderen Rolloanordnung 10. Die erste Stelle 34 bzw. 36 und die zweite Stelle 38 bzw. 40 befinden sich an entgegengesetzten Enden des jeweiligen Antriebskabels 26 bzw. 28, wobei das Ritzel 32 dazwischen angreift. Jedes Antriebskabel 26, 28 ist zweimal um je 90° umgelenkt, wobei die beiden Antriebskabel 26, 28 zusammen eine in der Aufsicht U-förmige Konfiguration bilden und wobei das Ritzel 32 im Verbindungsbereich zwischen den beiden "Schenkeln" des U angreift. Bei dieser Konfiguration bewegen sich die jeweilige erste Stelle 34 bzw. 36 und die jeweilige zweite Stelle 38 bzw. 40 in entgegengesetzter Richtung, wobei die jeweilige erste Stelle 34 bzw. 36 an dem Zugspriegel 24 an einer anderen Seite als die jeweilige zweite Stelle 38 bzw. 40 an dem anderen Zugspriegel 22 angreift.

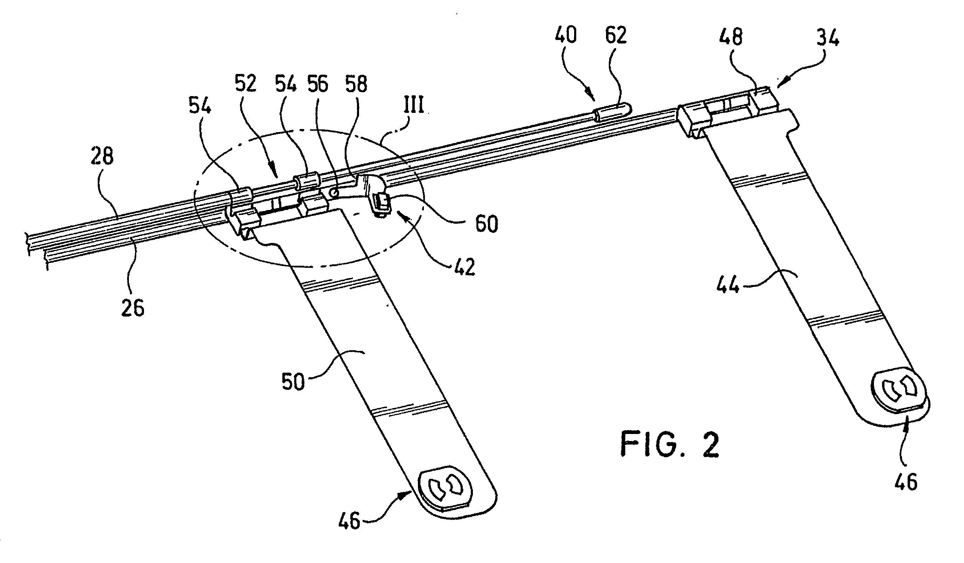

Bei dem in Fig. 1 gezeigten Beispiel ist die Auszugslänge der Rollobahn 20 der vorderen Rolloanordnung 12 größer als die Auszugslänge der Rollobahn 18 der hinteren Rolloanordnung 10. Um beide Zugspriegel 22 bzw. 24 mit demselben Antriebskabel 26 bzw. 28 antreiben zu können, ist die Kopplung zwischen der zweiten Stelle 38, 40 und dem Zugspriegel 22 mittels eines Verriegelungselements 42 lösbar gestaltet. Dabei ist die zweite Stelle 38 bzw. 40 in einem ersten Bewegungsabschnitt der zweiten Stelle 38 bzw. 40 fest mit dem Zugspriegel 22 gekoppelt, während sie in einem sich daran anschließenden zweiten Bewegungsabschnitt von dem Zugspriegel 22 entkoppelt ist, wobei die Kopplung bzw. Entkopplung beim Erreichen der Grenze zwischen dem ersten und dem zweiten Bewegungsabschnitt mittels der Verriegelungselements 42 selbsttätig erfolgt, wie dies nachfolgend unter Bezugnahme auf die Fig. 2 bis 6 näher erläutert ist.

Gemäß Fig. 2 ist für die Anbindung des Zugspriegels 24 an das Antriebskabel 26 ein Ausleger 44 vorgesehen, der an einem innen liegenden Ende eine Zugspriegelanbindung 46 aufweist und an seinem außen liegenden Ende mittels einer Anspritzung 48 fest an der ersten Stelle 34 mit dem Antriebskabel 26 verbunden ist. Für die Anbindung des Zugspriegels 22 an das Antriebskabel 28 ist ein Ausleger 50 vorgesehen, der an seinem innen liegenden Ende mit einer Zugspriegelanbindung 46 versehen ist und an seinem außen liegenden Ende mit einem Koppelelement 52 versehen ist. Das Koppelelement weist zwei Gleitführungselemente 54 auf, welche das Antriebskabel 28 derart umgreifen, dass dieses innerhalb der Gleitführungselemente 54 verschiebbar geführt ist. Ferner weist das Koppelelement 52 eine Sperrklinke 42 auf, die bezüglich des Koppelelements 52 um ein Schwenklager 56 schwenkbar gelagert ist. Die Sperrklinke weist eine Nase 58 und einen Kulissenstift 60 auf.

Das Antriebskabel 28 ist an einem Ende mit einer als Endkappe 62 ausgebildeten Hülse versehen, welches das Antriebskabel umgibt und funktionsmäßig die zweite Stelle 40 bildet.

Die Funktionsweise des Koppelelements 52 wird unter Bezugnahme auf die Fig. 3 bis 6 näher erläutert.

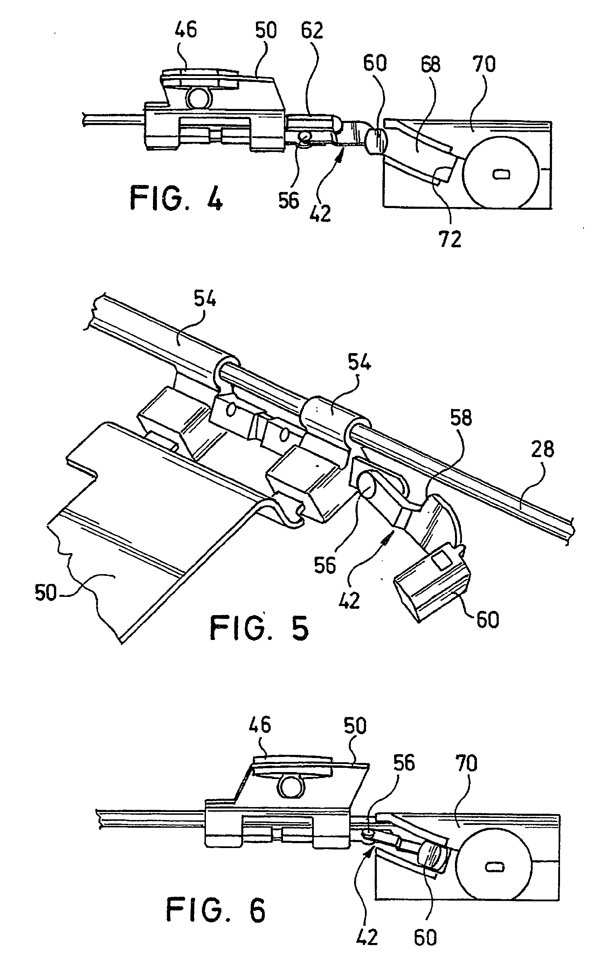

In den Fig. 3 und 4 ist das Koppelelement 52 - im Gegensatz zu Fig. 2 - in dem Zustand gezeigt, in welchem es in festem Eingriff mit dem Antriebskabel 28 steht, d.h. in dieser Stellung ist der Ausleger 50 und damit der Zugspriegel 22 fest mit dem Antriebskabel 28 gekoppelt. Diese Kopplung erfolgt in der Schubrichtung (Richtung des Pfeils 64) durch Anlage der Spitze der Endkappe 62 an der Nase 58 der Sperrklinke 42, die z.B. entweder durch Schwerkraft oder Federvorspannung in der in Fig. 3 und 4 gezeigten Stellung gehalten wird. In der Zugrichtung (Richtung des Pfeils 66) erfolgt die Koppelung durch Anlage des zur Spitze entgegengesetzten Endes der Endkappe 62 an einem der beiden Gleitführungselement 54. Die in Fig. 3 und 4 gezeigte feste Koppelung zwischen dem Antriebskabel 28 und dem Ausleger 50 besteht, solange sich die zweite Stelle 40 des Antriebskabels 28, d.h. die Endkappe 62, im freien Auszugsbereich der Rollobahn 18 bewegt (dies ist der erste Bewegungsabschnitt der zweiten Stelle 40.

Sobald jedoch die Endkappe 62 und mit dieser das Koppelelement 52 bzw. der Ausleger die Endlage des Auslegers 50 bzw. des Zugspriegels 22 erreichen, in welcher die Rollobahn 18 vollständig aufgewickelt ist, wird die feste Kopplung zwischen dem Koppelelement 52 und dem Antriebskabel 28 gelöst.

Dies erfolgt dadurch, dass der Kulissenstift 60 der Sperrklinke 42 in einen Kulissenschlitz 68 einer dachfesten Kulisse 70 einläuft und durch eine entsprechende Neigung des Kulissenstiftes 60 darin so geführt wird, dass die Sperrklinke 42 um das Schwenklager 56 so bezüglich des Koppelelements 52 verschwenkt wird, dass die Nase 58 außer Eingriff mit der Spitze der Endkappe 62 kommt, so dass die Endkappe 62 von dem Koppelelement 52 frei kommt. Durch einen Anschlag 72 in dem Kulissenschlitz 68 für den Kulissenstift 60 wird die Bewegung des Koppelelements 52 und damit des Auslegers 50 bzw. des Zugspriegels 22 beendet, während sich das Antriebskabel 28 durch entsprechende Gleitführung in den Gleitführungselementen 54 weiter bewegen kann. Diese Weiterbewegen des Antriebskabels 28 ist deshalb erforderlich, weil das andere Ende des Antriebskabels 28 an der Stelle 34 fest mit dem Zugspriegel 24 der vorderen Rolloanordnung 12 gekoppelt ist, welche eine größere Auszugslänge als die Rollobahn 18 der hinteren Rolloanordnung 10 aufweist.

Die entkoppelte Stellung des Koppelelements 52 ist in den Fig. 5 und 6 gezeigt.

In den Fig. 3 und 5 ist die Kulisse 70 weggelassen.

Bisher wurde der Ablauf beschrieben, wenn die beiden Rolloanordnungen 10 und 12 aufgewickelt werden. Wenn die Rolloanordnungen 10 und 12 abgewickelt werden, läuft der beschriebene Ablauf in umgekehrter Richtung ab, d.h. zunächst wird nur die Rollobahn 20 der hinteren Rolloanordnung 12 durch Verschiebung des Zugspriegels 24 abgewickelt, wobei sich das Betriebskabel 28 in Fig. 5 und 6 in Richtung des Teils 66 bewegt und dabei in den Gleitführungselementen 54 gleitet. Sobald die Endkappe 62 dabei eine dem Unterschied der Auszugslänge zwischen den beiden Rolloanordnungen 10 und 12 enstprechende Wegstrecke zurückgelegt hat, erreicht die Endkappe 62 mit ihrem von der Spitze abgewandten Ende das näher bei der Sperrklinke 42 liegende Gleitführungselement 54 und legt sich an dieses an, wodurch nun das Koppelelement 52 - und der Ausleger 50 und der Zugspriegel 22 - von nun an von der Endkappe 62 mitgenommen werden und sich in Richtung des Pfeils 66 bewegen. Dadurch verläßt auch der Kulissenstift 60 der Sperrklinke 42 wieder den Kulissenschlitz 68, wodurch die Sperrklinke 42 mit der Nase 58 in Fig. 6 bzw. 4 wieder nach oben schwenkt, so dass sich die Nase 58 wieder an die Spitze der Endkappe 62 anlegt und mit dieser in Eingriff tritt. Durch die Mitnahme des Gleitführungselements 54 durch die Endkappe 62 wird der Zugspriegel 23 ausgezogen und dadurch die Rollobahn 18 der vorderen Rolloanordnung 10 abgewickelt bzw. ausgezogen.

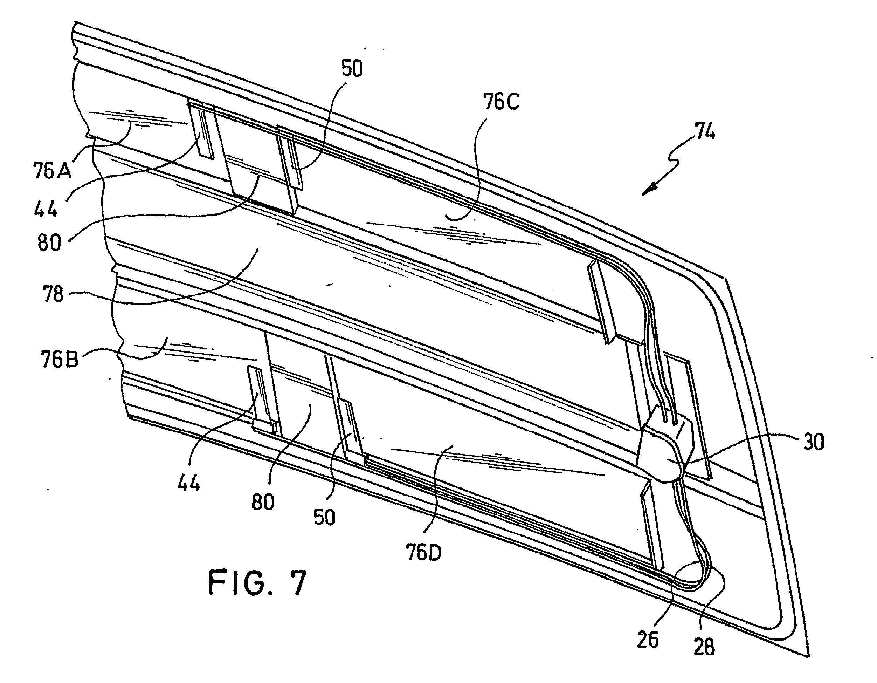

In Fig. 7 ist schematisch ein Beispiel für die Realisierung des in den Fig. 1 bis 6 gezeigten Prinzips für ein Dachmodul 74 gezeigt, welches vier transparente Dachabschnitte 76A bis76D aufweist, die von einem Rollosystem wahlweise abschattbar sein sollen (die Wickelwellen und die Rollobahnen sind in Fig. 7 weggelassen). Die beiden vorderen Dachabschnitte 76A, 76B sind dabei länger als die hinteren Dachabschnitte 76C und 76D, so dass für die vorderen Dachabschnitte 76A, 76B eine Rolloanordnung mit einer größeren Auszugslänge als für die hinteren Dachabschnitte 76C, 76D erforderlich ist. Insofern entspricht das in den Fig. 1 bis 6 gezeigte Rollosystem dieser Anforderung.

Da jedoch das Dachmodul 74 eine Mittelkonsole 78 aufweist, kann hier kein die volle Breite des Dachmoduls abdeckendes Rollosystem verwendet werden, sondern jede der beiden Rolloanordnungen 10 und 12 von Fig. 1 wird in zwei durch die Mittelkonsole 78 unterteilte spiegelsymmetrische Abschnitte aufgeteilt. Dabei ist es zweckmäßig, die Rollobahnen 18, 20, die Wickelwellen 14, 16 und die Zugspriegel 22, 24 jeweils in zwei bzgl. der Mittelkonsole 78 symmetrische Abschnitte aufzuteilen. Die Zugspriegel können dabei mit einer Seite an der Mittelkonsole 78 und mit der anderen im Randbereich des Dachmoduls 74 geführt sein. Die Wickelwellen sind zweckmäßigerweise im Bereich der Traverse 80 zwischen den Dachabschnitten 76A, 76B bzw. 76C, 76D angeordnet.

Im Falle beidseitig angetriebener Zugspriegel wie in Fig. 1 kann die Anbindung der Zugspriegel 22, 24 an die Antriebskabel 26, 28 entweder direkt (in diesem Fall wären die Elemente 48 und 52 von Fig.2 statt mit den Auslegern 44, 50 mit dem jeweiligen Zugspriegel direkt verbunden) oder wie in Fig. 2 gezeigt über ein Verbindungselement, z.B. einen Ausleger 44, 50, erfolgen.

### Bezugszeichenliste

- 10: hintere Rolloanordnung
- 12: vordere Rolloanordnung
- 14, 16: Wickelwellen
- 18,20: Rollobahn
- 22, 24: Zugspriegel
- 26, 28: Antriebskabel
- 30: Antriebsmotor
- 32: Antriebsritzel
- 34, 36: feste Angriffsstellen
- 38, 40: lösbare Angriffsstellen
- 42: Sperrklinke
- 44: Ausleger
- 46: Zugspriegelanbindung
- 48: Anspritzung
- 50: Ausleger
- 52: Ankoppelelement
- 54: Gleitführungselement
- 56: Schwenklager
- 58: Nase
- 60: Kulissenstift
- 62: Endkappe
- 64, 66: Bewegungsrichtung von 62
- 68: Kulissenschlitz
- 70: Kulisse
- 72: Anschlag in 68
- 74: Dachmodul
- 76A bis 76D: transparente Dachbereiche
- 78: Mittelkonsole
- 80: Traverse

## Patentansprüche

1. Rollosystem für ein Fahrzeugdach, mit mindestens einer ersten (12) und einer zweiten Rolloanordnung (10), die in Dachlängsrichtung versetzt zueinander angeordnet sind und jeweils eine Wickelwelle (14, 16) , eine ausgehend von ihrem einen Ende darauf aufwickelbare Rollobahn (18, 20) sowie einen an dem freien Ende der Rollobahn angreifenden Zugspriegel (22, 24) aufweisen, und mindestens einem von einem Antrieb (30, 32) angetriebenen drucksteifen Antriebskabel (26, 28), welches an einer ersten Stelle (34, 36) fest mit dem Zugspriegel (24) der ersten Rolloanordnung (12) gekoppelt ist, **dadurch gekennzeichnet, dass** das Antriebskabel (26, 28) an einer zweiten Stelle (38, 40, 62) mit dem Zugspriegel (22) der zweiten Rolloanordnung (10) in einem ersten Bewegungsabschnitt der zweiten Stelle fest gekoppelt ist und in einem sich daran anschließenden zweiten Bewegungsabschnitt der zweiten Stelle von dem Zugspriegel der zweiten Rolloanordnung entkoppelt ist, wobei die Koppelung bzw. Entkoppelung beim Erreichen der Grenze zwischen dem ersten und dem zweiten Bewegungsabschnitt mittels eines Verriegelungselements (42) selbsttätig erfolgt.

2. Rollosystem gemäß Anspruch 1, **dadurch gekennzeichnet, dass** zwei der drucksteifen Antriebskabel (26, 28) vorgesehen sind, die von dem Antrieb in entgegengesetzter Richtung gemeinsam angetrieben werden und jeweils an gegenüberliegenden seitlichen Enden des jeweiligen Zugspriegels (22, 24) über die ersten (34, 36) bzw. zweiten Stellen (38, 40, 62) angreifen.

3. Rollosystem gemäß Anspruch 2, **dadurch gekennzeichnet, dass** das eine (26) der Antriebskabel an der linken Seite des Zugspriegels (24) der ersten Rolloanordnung (12) und an der rechten Seite des Zugspriegels (22) der zweiten Rolloanordnung (10) angreift, während das andere (28) der Antriebskabel an der rechten Seite des Zugspriegels der ersten Rolloanordnung und an der linken Seite des Zugspriegels der zweiten Rolloanordnung angreift.

4. Rollosystem gemäß Anspruch 2 oder 3, **dadurch gekennzeichnet, dass** der Antrieb einen Motor (30) und ein von dem Motor angetriebenes Ritzel (32) aufweist, welches zwischen den beidem Antriebskabeln (26, 28) angeordnet ist und an seinem Umfang an beiden Antriebskabeln angreift.

5. Rollosystem gemäß einem der vorhergehenden Ansprüche, **dadurch gekennzeichnet, dass** der Antrieb (30, 32) zwischen der ersten (34, 36) und der zweiten Stelle (38, 40, 62) an dem bzw. den Antriebskabel(n) (26, 28) angreift.

6. Rollosystem gemäß einem der vorhergehenden Ansprüche, **dadurch gekennzeichnet, dass** sich die zweite Stelle (38, 40) in entgegengesetzter Richtung zu der ersten Stelle (34, 36) bewegt und die beiden Rolloanordnungen (10, 12) in entgegengesetzter Richtung zueinander ausziehbar sind.

7. Rollosystem gemäß einem der vorhergehenden Ansprüche, **dadurch gekennzeichnet, dass** die beiden Wickelwellen (14, 16) in die Aufwickelrichtung vorgespannt sind.

8. Rollosystem gemäß einem der vorhergehenden Ansprüche, **dadurch gekennzeichnet, dass** sich die erste Stelle (34, 36) an einem Ende des Antriebskabels (26, 28) befindet.

9. Rollosystem gemäß Anspruch 8, **dadurch gekennzeichnet, dass** sich die zweite Stelle (38, 40, 62) an dem anderen Ende des Antriebskabels (26, 28) befindet.

10. Rollosystem gemäß einem der vorhergehenden Ansprüche, **dadurch gekennzeichnet, dass** die Grenze zwischen dem ersten und dem zweiten Bewegungsabschnitt der zweiten Stelle (38, 40, 62) der Endlage des Zugspriegels (22) der zweiten Rolloanordnung (10) in der vollständig aufgewickelten Position der Rollobahn (18) oder in der in der vollständig abgewickelten Position der Rollobahn entspricht.

11. Rollosystem gemäß einem der vorhergehenden Ansprüche, **dadurch gekennzeichnet, dass** das Verriegelungselement (42) mit dem Zugspriegel (22) der zweiten Rolloanordnung (10) verbunden ist und in Abhängigkeit von seiner Position entlang der Bewegungsrichtung des Zugspriegels der zweiten Rolloanordnung zwischen einer Verrieglungsstellung und einer Freigabestellung selbsttätig verstellt wird.

12. Rollosystem gemäß Anspruch 11, **dadurch gekennzeichnet, dass** die Verstellung des Verriegelungselements (42) zwischen der Verrieglungsstellung und der Freigabestellung durch den Eingriff des Verriegelungselements mit einer bzgl. des Fahrzeugdaches feststehenden Kulissenbahn (68) erfolgt.

13. Rollosystem gemäß Anspruch 12, **dadurch gekennzeichnet, dass** das Verriegelungselement als bzgl. des Zugspriegels (22) der zweiten Rolloanordnung (10) schwenkbare Sperrklinke (42) ausgebildet ist.

14. Rollosystem gemäß Anspruch 13, **dadurch gekennzeichnet, dass** die Sperrklinke (42) ein in die Kulissenbahn (68) eingreifendes Kulissenelement (60) aufweist.

15. Rollosystem gemäß Anspruch 15, **dadurch gekennzeichnet, dass** die Kulissenbahn als Kulissenschlitz (68) und das Kulissenelement als darin geführter Kulissenstift (60) ausgebildet sind.

16. Rollosystem gemäß einem der vorhergehenden Ansprüche, **dadurch gekennzeichnet, dass** ein mit dem Zugspriegel (22) der zweiten Rolloanordnung (10) verbundenes Gleitführungselement (54) für das Antriebskabel (26, 28) vorgesehen ist.

17. Rollosystem gemäß einem der vorhergehenden Ansprüche, **dadurch gekennzeichnet, dass** das Verriegelungselement (42) nur in einer (64) der beiden Antriebsrichtungen des Antriebskabels wirkt.

18. Rollosystem gemäß Anspruch 16, **dadurch gekennzeichnet, dass** das Gleitführungselement (54) als Mitnehmer bzgl. der zweiten Stelle (62) in der anderen (66) der beiden Antriebsrichtungen des Antriebskabels (26, 28) wirkt.

19. Rollosystem gemäß Anspruch 18, **dadurch gekennzeichnet, dass** die zweite Stelle (38, 40) von einer das Antriebskabel (26, 28) umgebenden Hülse (62) gebildet wird, deren eines Ende zum Eingriff mit dem Verriegelungselement (42) ausgebildet ist und deren anderes Ende zum Eingriff mit dem Gleitführungselement (54) ausgebildet ist.

20. Rollosystem gemäß Anspruch 1, **dadurch gekennzeichnet, dass** zwei der drucksteifen Antriebskabel (26, 28) und vier der Rolloanordnungen vorgesehen sind, wobei die Antriebskabel von dem Antrieb (30) in entgegengesetzter Richtung gemeinsam angetrieben werden und wobei die erste (34, 36) bzw. zweite Stelle (38, 40, 62) eines jeden Antriebskabels an jeweils einem anderen der Zugspriegel angreift.

21. Rollosystem gemäß Anspruch 20, **dadurch gekennzeichnet, dass** die Rolloanordnungen paarweise hintereinander angeordnet sind, wobei die beiden Rolloanordnungen eines jeden Paars symmetrisch bezüglich der Dachlängsrichtung ausgebildet sind, wobei das erste der Antriebskabel an dem Zugspriegel der vorderen linken Rolloanordnung und an dem Zugspriegel der hinteren rechten Rolloanordnung angreift, während das zweite der Antriebskabel an dem Zugspriegel der vorderen rechten Rolloanordnung und an dem Zugspriegel der hinteren linken Rolloanordnung angreift.

## Claims

1. Roller blind system for a vehicle roof, having at least one first (12) and one second roller blind arrangement (10) which are arranged offset with respect to one another in the roof longitudinal direction and which have in each case one winding shaft (14, 16), one roller blind web (18, 20) which can be wound, proceeding from its one end, on said winding shaft (14, 16), and one tension hoop (22, 24) which engages on the free end of the roller blind web, and at least one drive cable (26, 28) which is driven by a drive (30, 32) and which is rigid in compression and which is fixedly coupled, at a first point (34, 36), to the tension hoop (24) of the first roller blind arrangement (12), **characterized in that** the drive cable (26, 28) is fixedly coupled, at a second point (38, 40, 62), to the tension hoop (22) of the second roller blind arrangement (10) in a first movement section of the second point, and in a second movement section, which adjoins said first movement section, of the second point, is decoupled from the tension hoop of the second roller blind arrangement, with the coupling and decoupling taking place automatically by means of a locking element (42) in the event of the boundary between the first and second movement sections being reached.

2. Roller blind system according to Claim 1, **characterized in that** two of the drive cables (26, 28) which are rigid in compression are provided, which drive cables (26, 28) are driven together by the drive in opposite directions and which engage in each case on opposite lateral ends of the respective tension hoop (22, 24) by means of the first (34, 36) and second points (38, 40, 62).

3. Roller blind system according to Claim 2, **characterized in that** one (26) of the drive cables engages on the left side of the tension hoop (24) of the first roller blind arrangement (12) and on the right side of the tension hoop (22) of the second roller blind arrangement (10), while the other (28) of the drive cables engages on the right side of the tension hoop of the first roller blind arrangement and on the left side of the tension hoop of the second roller blind arrangement.

4. Roller blind system according to Claim 2 or 3, **characterized in that** the drive has a motor (30) and a pinion (32) which is driven by the motor (30) and which is arranged between the two drive cables (26, 28) and which, at its periphery, engages on the two drive cables.

5. Roller blind system according to one of the preceding claims, **characterized in that** the drive (30, 32) engages on the drive cable(s) (26, 28) between the first (34, 36) and the second point (38, 40, 62).

6. Roller blind system according to one of the preceding claims, **characterized in that** the second point (38, 40) moves in the opposite direction to the first point (34, 36) and the two roller blind arrangements (10, 12) can be pulled out in opposite directions to one another.

7. Roller blind system according to one of the preceding claims, **characterized in that** the two winding shafts (14, 16) are preloaded in the winding-up direction.

8. Roller blind system according to one of the preceding claims, **characterized in that** the first point (34, 36) is situated at one end of the drive cable (26, 28).

9. Roller blind system according to Claim 8, **characterized in that** the second point (38, 40, 62) is situated at the other end of the drive cable (26, 28).

10. Roller blind system according to one of the preceding claims, **characterized in that** the boundary between the first and the second movement sections of the second point (38, 40, 62) corresponds to the end position of the tension hoop (22) of the second roller blind arrangement (10) in the fully wound-up position of the roller blind web (18) or in the fully unwound position of the roller blind web.

11. Roller blind system according to one of the preceding claims, **characterized in that** the locking element (42) is connected to the tension hoop (22) of the second roller blind arrangement (10) and is automatically adjusted, as a function of its position along the movement direction of the tension hoop of the second roller blind arrangement, between a locking position and a release position.

12. Roller blind system according to Claim 11, **characterized in that** the adjustment of the locking element (42) between the locking position and the release position takes place by means of the engagement of the locking element with a slideway (68) which is fixed with respect to the vehicle roof.

13. Roller blind system according to Claim 12, **characterized in that** the locking element is formed as a pawl (42) which can be pivoted with respect to the tension hoop (22) of the second roller blind arrangement (10).

14. Roller blind system according to Claim 13, **characterized in that** the pawl (42) has a sliding element (60) which engages into the slideway (68).

15. Roller blind system according to Claim 15, **characterized in that** the slideway is formed as a sliding slot (68) and the sliding element is formed as a sliding pin (60) which is guided in said sliding slot (68).

16. Roller blind system according to one of the preceding claims, **characterized in that** a sliding guide element (54), which is connected to the tension hoop (22) of the second roller blind arrangement (10), for the drive cable (26, 28) is provided.

17. Roller blind system according to one of the preceding claims, **characterized in that** the locking element (42) acts only in one (64) of the two drive directions of the drive cable.

18. Roller blind system according to Claim 16, **characterized in that** the sliding guide element (54) acts as a driver with respect to the second point (62) in the other (66) of the two drive directions of the drive cable (26, 28).

19. Roller blind system according to Claim 18, **characterized in that** the second point (38, 40) is formed by a sleeve (62) which surrounds the drive cable (26, 28), one end of which sleeve (62) is formed so as to engage with the locking element (42) and the other end of which sleeve (62) is formed so as to engage with the sliding guide element (54).

20. Roller blind system according to Claim 1, **characterized in that** two of the drive cables (26, 28) which are rigid in compression and four of the roller blind arrangements are provided, with the drive cables being driven together by the drive (30) in opposite directions and with the first (34, 36) and second point (38, 40, 62) of each drive cable engaging in each case on a different tension hoop.

21. Roller blind system according to Claim 20, **characterized in that** the roller blind arrangements are arranged one behind the other in pairs, with the two roller blind arrangements of each pair being formed symmetrically with respect to the roof longitudinal direction, with the first of the drive cables engaging on the tension hoop of the front left roller blind arrangement and on the tension hoop of the rear right roller blind arrangement, while the second of the drive cables engages on the tension hoop of the front right roller blind arrangement and on the tension hoop of the rear left roller blind arrangement.

## Revendications

1. Système de store pour un toit de véhicule, avec au moins un premier dispositif de store (12) et un deuxième dispositif de store (10), qui sont disposés avec un décalage l'un par rapport à l'autre dans la direction longitudinale du toit et qui comprennent chaque fois une arbre d'enroulement (14, 16), une bande de store (18, 20) enroulable sur celui-ci à partir d'une première extrémité ainsi qu'un arceau de traction (22, 24) accroché à l'extrémité libre de la bande de store, et avec au moins un câble d'entraînement (26, 28) rigide en compression entraîné par un entraînement (30, 32), qui est couplé solidement en un premier point (34, 36) à l'arceau de traction (24) du premier dispositif de store (12), **caractérisé en ce que** le câble d'entraînement (26, 28) est couplé solidement en un deuxième point (38, 40, 62) à l'arceau de traction (22) du deuxième dispositif de store (10) dans un premier segment de déplacement du deuxième point et est découplé de l'arceau de traction du deuxième dispositif de store dans un segment de déplacement du deuxième point se raccordant à celui-ci, dans lequel le couplage ou le découplage se produit automatiquement au moyen d'un élément de verrouillage (42) lorsque la limite entre le premier et le deuxième segments de déplacement est atteinte.

2. Système de store selon la revendication 1, **caractérisé en ce qu'**il est prévu deux câbles d'entraînement (26, 28) rigides en compression, qui sont entraînés en même temps en sens contraire par l'entraînement et sont chaque fois accrochés à des extrémités latérales opposées de l'arceau de traction respectif (22, 24) au moyen des premiers points (34, 36) ou des deuxièmes points (38, 40, 62).

3. Système de store selon la revendication 2, **caractérisé en ce qu'**un des câbles d'entraînement (26) est accroché sur le côté gauche de l'arceau de traction (24) du premier dispositif de store (12) et sur le côté droit de l'arceau de traction (22) du deuxième dispositif de store (10), tandis que l'autre des câbles d'entraînement (28) est accroché sur le côté droit de l'arceau de traction du premier dispositif de store et sur le côté gauche de l'arceau de traction du deuxième dispositif de store.

4. Système de store selon la revendication 2 ou 3, **caractérisé en ce que** l'entraînement comprend un moteur (30) et un pignon (32) entraîné par le moteur, qui est disposé entre les deux câbles d'entraînement (26, 28) et qui agit par sa périphérie sur les deux câbles d'entraînement.

5. Système de store selon l'une quelconque des revendications précédentes, **caractérisé en ce que** l'entraînement (30, 32) agit sur le/les câble(s) d'entraînement (26, 28) entre le premier point (34, 36) et le deuxième point (38, 40, 62).

6. Système de store selon l'une quelconque des revendications précédentes, **caractérisé en ce que** le deuxième point (38, 40) se déplace en sens contraire par rapport au premier point (34, 36) et les deux dispositifs de store (10, 12) peuvent être étendus en sens contraire l'un par rapport à l'autre.

7. Système de store selon l'une quelconque des revendications précédentes, **caractérisé en ce que** les deux arbres d'enroulement (14, 16) sont précontraints dans le sens de l'enroulement.

8. Système de store selon l'une quelconque des revendications précédentes, **caractérisé en ce que** le premier point (34, 36) se trouve à une extrémité du câble d'entraînement (26, 28).

9. Système de store selon la revendication 8, **caractérisé en ce que** le deuxième point (38, 40, 62) se trouve à l'autre extrémité du câble d'entraînement (26, 28).

10. Système de store selon l'une quelconque des revendications précédentes, **caractérisé en ce que** la limite entre le premier et le deuxième segments de déplacement du deuxième point (38, 40, 62) correspond à la position terminale de l'arceau de traction (22) du deuxième dispositif de store (10) dans la position entièrement enroulée de la bande de store (18) ou dans la position entièrement déroulée de la bande de store.

11. Système de store selon l'une quelconque des revendications précédentes, **caractérisé en ce que** l'élément de verrouillage (42) est relié à l'arceau de traction (22) du deuxième dispositif de store (10) et est déplacé entre une position de verrouillage et une position de libération en fonction de sa position le long du sens de déplacement de l'arceau de traction du deuxième dispositif de store.

12. Système de store selon la revendication 11, **caractérisé en ce que** le déplacement de l'élément de verrouillage (42) entre la position de verrouillage et la position de libération est effectué au moyen de l'engagement de l'élément de verrouillage dans une coulisse (68) fixe par rapport au toit du véhicule.

13. Système de store selon la revendication 12, **caractérisé en ce que** l'élément de verrouillage est réalisé sous la forme d'un cliquet d'arrêt (42) pivotant par rapport à l'arceau de traction (22) du deuxième dispositif de store (10).

14. Système de store selon la revendication 13, **caractérisé en ce que** le cliquet d'arrêt (42) comporte un élément coulissant (60) engagé dans la coulisse (68).

15. Système de store selon la revendication 15, **caractérisé en ce que** la coulisse est réalisée sous la forme d'une fente de coulisse (68) et l'élément coulissant sous la forme d'une tige de coulisse (60) guidée dans celle-ci.

16. Système de store selon l'une quelconque des revendications précédentes, **caractérisé en ce qu'**il est prévu un élément de guidage de glissement (54), relié à l'arceau de traction (22) du deuxième dispositif de store (10), pour le câble d'entraînement (26, 28).

17. Système de store selon l'une quelconque des revendications précédentes, **caractérisé en ce que** l'élément de verrouillage (42) n'agit que dans un (64) des deux sens d'entraînement du câble d'entraînement.

18. Système de store selon la revendication 16, **caractérisé en ce que** l'élément de guidage de glissement (54) agit sous forme d'élément d'entraînement par rapport au deuxième point (62) dans l'autre (66) des deux sens d'entraînement du câble d'entraînement (26, 28).

19. Système de store selon la revendication 18, **caractérisé en ce que** le deuxième point (38, 40) est formé par une douille (62) entourant le câble d'entraînement (26, 28), dont une extrémité est configurée pour s'engager avec l'élément de verrouillage (42) et dont l'autre extrémité est configurée pour s'engager avec l'élément de guidage de glissement (54).

20. Système de store selon la revendication 1, **caractérisé en ce qu'**il est prévu deux câbles d'entraînement (26, 28) rigides en compression et quatre dispositifs de store, dans lequel les câbles d'entraînement sont entraînés en même temps en sens contraire par l'entraînement (30) et dans lequel le premier point (34, 36) ou le deuxième point (38, 40, 62) de chaque câble d'entraînement agit respectivement sur un autre des arceaux de traction.

21. Système de store selon la revendication 20, **caractérisé en ce que** les dispositifs de store sont disposés par paire l'un derrière l'autre, dans lequel les deux dispositifs de store de chaque paire sont réalisés symétriquement par rapport à la direction longitudinale du toit, dans lequel le premier des câbles d'entraînement est accroché à l'arceau de traction du dispositif de store avant gauche et à l'arceau de traction du dispositif de store arrière droit, tandis que le deuxième des câbles d'entraînement est accroché à l'arceau de traction du dispositif de store avant droit et à l'arceau de traction du dispositif de store arrière gauche.
